Europäisches Patentamt

European Patent Office

Office européen des brevets

(11) Numéro de publication: **0 406 043 A1**

## (12) DEMANDE DE BREVET EUROPEEN

(21) Numéro de dépôt: **90401585.6**

(22) Date de dépôt: **08.06.90**

(51) Int. Cl.5: **B23K 26/00, F22B 37/00**

(30) Priorité: **28.06.89 FR 8908635**

(43) Date de publication de la demande:
**02.01.91 Bulletin 91/01**

(84) Etats contractants désignés:
**BE CH DE ES LI SE**

(71) Demandeur: **FRAMATOME**
**Tour Fiat 1, Place de la Coupole**
**F-92400 Courbevoie(FR)**

(72) Inventeur: **Griffaton, Jacques**
**6 bis rue St-Georges**
**F-71100 Chalon S/Saone(FR)**

(74) Mandataire: **Jacobson, Claude et al**
**Cabinet Lavoix 2, Place d'Estienne d'Orves**
**F-75441 Paris Cedex 09(FR)**

(54) Outillage de travail à l'intérieur d'un élément tubulaire.

(57) Le bâti (9), que l'on positionne par rapport à l'élément tubulaire (T), comporte des moyens débrayables (40) d'entrainement en rotation de la canne (18) de travail, et ces moyens peuvent coopérer avec au moins deux régions (26 à 28) de la canne.

On peut ainsi travailler dans plusieurs zones différentes de l'élément tubulaire.

Application au manchonnage par soudage au laser des tubes de générateur de vapeur des réacteurs nucléaires à eau pressurisée.

FIG.2

EP 0 406 043 A1

La présente invention est relative à un outillage de travail à l'intérieur d'un élément tubulaire, du type comprenant une canne qui comporte à son extrémité avant une tête de travail rotative équipée de moyens de centrage dans l'élément tubulaire, et un bâti traversé par la canne et muni de moyens de positionnement par rapport à l'élément tubulaire, ce bâti étant équipé de moyens d'entrainement en rotation de la canne. Elle s'applique notamment à la restauration de l'étanchéité des tubes de générateurs de vapeur d'un réacteur nucléaire à eau sous pression.

Les générateurs de vapeur des centrales nucléaires à eau sous pression comporte généralement un faisceau constitué d'un très grand nombre de tubes de petit diamètre coudés en U et fixés à chacune de leur extrémités par sertissage Dans une plaque tubulaire de forte épaisseur. La partie du générateur de vapeur située en dessous de la plaque tubulaire constitue une boîte à eau dans une première partie de laquelle l'eau "primaire" sous pression venant de la cuve du réacteur est répartie dans les tubes du faisceau. Dans une seconde partie, l'eau ayant circulé dans les tubes est récupérée, pour être renvoyée, par une conduite du circuit primaire du réacteur, dans la cuve renfermant le coeur constitué par les assemblages combustibles assurant l'échauffement de l'eau sous pression. L'eau d'alimentation du générateur de vapeur vient en contact avec la surface extérieure des tubes du faisceau, dans la partie du générateur de vapeur située au-dessus de la plaque tubulaire, pour y être transformée en vapeur, et cette vapeur est envoyée à la turbine associée au réacteur nucléaire.

Les parois des tubes du faisceau constituent donc une barrière entre l'eau sous pression constituant le fluide primaire du réacteur et l'eau d'alimentation constituant le fluide secondaire. Le fluide primaire qui vient en contact avec les assemblages combustibles et les structures internes de la cuve du réacteur contient des produits radioactifs en quantité plus ou moins importante. Il convient donc d'éviter toute mise en contact du fluide primaire et du fluide secondaire, dont la contamination pourrait avoir des conséquences très néfastes. Il faut pour cela éviter au maximum l'apparition de fuites à travers les parois des tubes du faisceau du générateur de vapeur et réparer le plus vite possible et de façon efficace les tubes dont la paroi est percée.

De telles réparations sont généralement nécessaires pendant la durée de vie normale du réacteur. En effet, du fait des contraintes d'origine thermique et mécanique ou de la corrosion subies par les tubes du faisceau, des fissures peuvent prendre naissance dans les parois des tubes du faisceau, aussi bien du côté primaire que du côté secondaire. Ces réparations sont effectuées pendant les phases d'entretien du réacteur nucléaire.

On connait un procédé de réparation des tubes du faisceau d'un générateur de vapeur par manchonnage de ces tubes, au niveau du défaut entraînant une perte d'étanchéité. Un manchon d'un diamètre extérieur un peu inférieur au diamètre intérieur du tube à réparer et d'une longueur suffisante pour recouvrir la zone défectueuse est introduit dans le tube, par la face d'entrée de la plaque tubulaire sur laquelle affleurent les extrémités des tubes. Il y est placé de façon à affleurer la face d'entrée de la plaque tubulaire pour les tubes situés dans la partie centrale de celle-ci, ou à mi-épaisseur de la plaque tubulaire pour les tubes situés en périphérie de celle-ci. Il est alors fixé à l'intérieur du tube de manière à réaliser deux jonctions étanches entre lui et le tube de part et d'autre de la zone défectueuse.

On connait de nombreuses méthodes pour réaliser la fixation du manchon de part en d'autre de la zone défectueuse. En particulier, il est connu de réaliser une expansion diamétrale du manchon dans deux zones voisines de ses extrémités situées pour l'une dans l'épaisseur de la plaque tubulaire, pour l'autre au-delà de la face de sortie de la plaque tubulaire, ceci après nettoyage du tube dans ces deux zones. L'expansion peut être obtenue soit par des méthodes hydrauliques ou mécaniques comme le dudgeonnage, soit par des méthodes d'expansion par explosion, soit par des méthodes de soudage ou de brasage.

Toutes ces opérations nécessitent d'intervenir à l'intérieur de la boîte à eau du générateur de vapeur, c'est-à-dire dans une partie de ce générateur qui a été en contact avec le fluide primaire chargé de produits radioactifs, pendant le fonctionnement du réacteur, et où un opérateur humain se trouve soumis à une forte radioactivité.

On a donc proposé des dispositifs automatiques et commandés à distance capables de réaliser au moins partiellement les opérations nécessaires pour le manchonnage des tubes.

On connait par exemple un procédé et un dispositif permettant d'installer dans un tube de générateur fuitard un manchon à partir de l'extérieur de la boîte à eau. Ce procédé et ce dispositif ont fait l'objet de la demande de brevet FR 2 598 209. Le manchon est introduit dans le tube à partir de l'exté rieur de la boîte à eau par un tube flexible appelé boa, sur un double expanseur hydraulique avec lequel l'opération d'accostage dans le tube est réalisée : après une dilatation suffisante réalisée dans les deux zones situées aux extrémités du manchon par gonflement des membranes élastiques du double expanseur, le manchon reste positionné dans le tube.

Les membranes sont alors décompressées et l'expanseur est retiré du manchon. Les outils de fixation, dudgeon haut et dudgeon bas, sont ensuite successivement introduits par le même flexible dans le manchon, respectivement dans la zone haute puis dans la zone basse pour réaliser la fixation du manchon par Opdudgeonnage.

L'inconvénient de cette méthode est qu'elle ne permet pas d'obtenir des fixations du manchon rigoureusement étanches.

Pour remédier à cet inconvénient, il est connu de réaliser la fixation par soudage au laser du manchon dans le tube à chaque extrémité du manchon.

La demande de brevet FR2 637 829 au nom de la Demanderesse propose un outillage du type indiqué plus haut, dans lequel le laser est de type YAG et son faisceau est transporté par une fibre optique.

L'invention a pour but de permettre de travailler dans plusieurs zones de l'élément tubulaire au moyen d'un outillage fiable et peu encombrant.

A cet effet, l'invention a pour objet un outillage du type précité, caractérisé en ce que les moyens d'entrainement en rotation sont adaptés pour coopérer avec au moins une région d'entraînement de la canne et sont équipés de moyens d'embrayage-débrayage par rapport à cette canne, l'outillage comprenant en outre des moyens d'avance longitudinale de la canne situés à distance, en arrière par rapport auxdits moyens d'entrainement en rotation.

Un exemple de réalisation de l'invention va maintenant être décrit à l'aide des figures schématiques annexées, parmi lesquelles :

- les Fig. 1A et 1B sont des coupes longitudinales des deux variantes de manchons utilisés pour la mise en oeuvre de l'invention dans le cas particulier ci-dessus ;
- la Fig. 2 représente en élévation l'ensemble d'un outillage suivant l'invention ;
- la Fig. 3 représente à plus grande échelle, en élévation, la canne de cet outillage ;
- les Fig. 4 et 5 montrent à plus grande échelle deux détails de cette canne ;
- la Fig. 6 est une vue en coupe d'une partie de l'outillage ; et
- la Fig. 7 est une coupe prise suivant la ligne VII-VII de la Fig. 6.

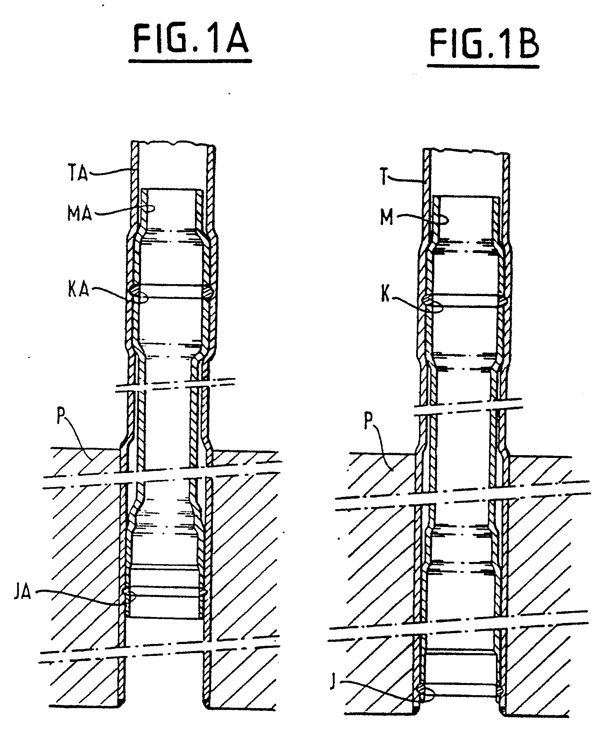

Les Fig. 1A et 1B reprépsentent les deux types de manchons utilisés pour la réparation de tubes de générateur de vapeur de réacteur nucléaire ;

- la Fig. 1A montre une coupe longitudinale d'un manchon MA utilisé pour réparer des tubes tels que TA situés dans la périphérie d'une plaque tubulaire P. un cordon de soudure JA constitue le joint inférieur, situé vers la mi-épaisseur de la plaque P.

- la Fig. 1B montre une coupe en élévation d'un manchon long utilisé pour réparer des tubes situés dans la partie centrale de la plaque tubulaire P, ce qui est le cas de 80 % des tubes. Le joint inférieur J se trouve près de la face inférieure de la plaque.

Le joint supérieur KA ou K est dans les deux cas situé au-delà de la face supérieure de la plaque P, près de l'extrémité supérieure du manchon.

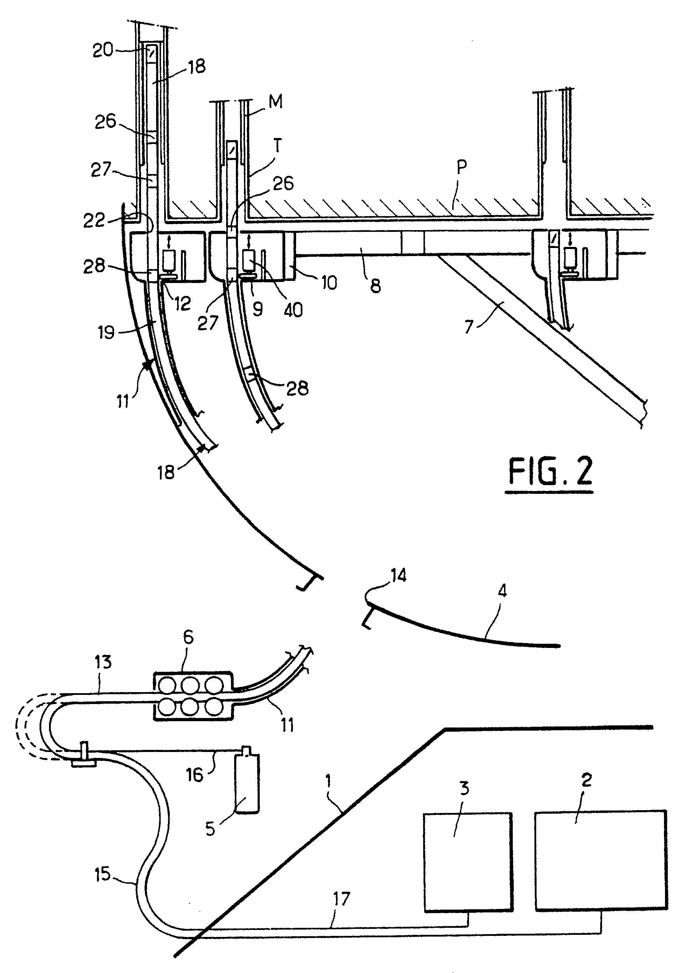

L'outillage représenté dans son ensemble à la Fig. 2 est destiné à réaliser automatiquement les deux soudures JA, KA ou J,K d'un manchonnage. Cet outillage comprend :

- à l'extérieur du bâtiment réacteur 1, un laser YAG 2 et une armoire d'alimentation électrique 3 ;
- dans le bâtiment réacteur mais à l'extérieur de la boîte à eau 4 du réacteur, une source de gaz neutre 5 et un tire-pousse 6 ;
- dans la boîte à eau, un porteur 7 dont le bras 8 porte un bâti 9 à son extrémité, par l'intermédiaire d'un élévateur 10.

Un tube souple 11 appelé boa s'étend d'une ouverture inférieure 12 du bâti 9 au tire-pousse 6, en traversant le trou d'homme 14 de la boîte à eau. Dans ce boa passe une gaine 13 contenant une fibre optique gainée 15 provenant du laser 2, une conduite de gaz 16 alimentée par la source 5, et des câbles électriques 17 provenant de l'armoire 3, la gaine 13 constituant le prolongement arrière d'une canne de soudage 18.

La canne 18 comporte une partie arrière souple 19 de longueur importante et se termine vers l'avant par une tête de soudage rigide 20.

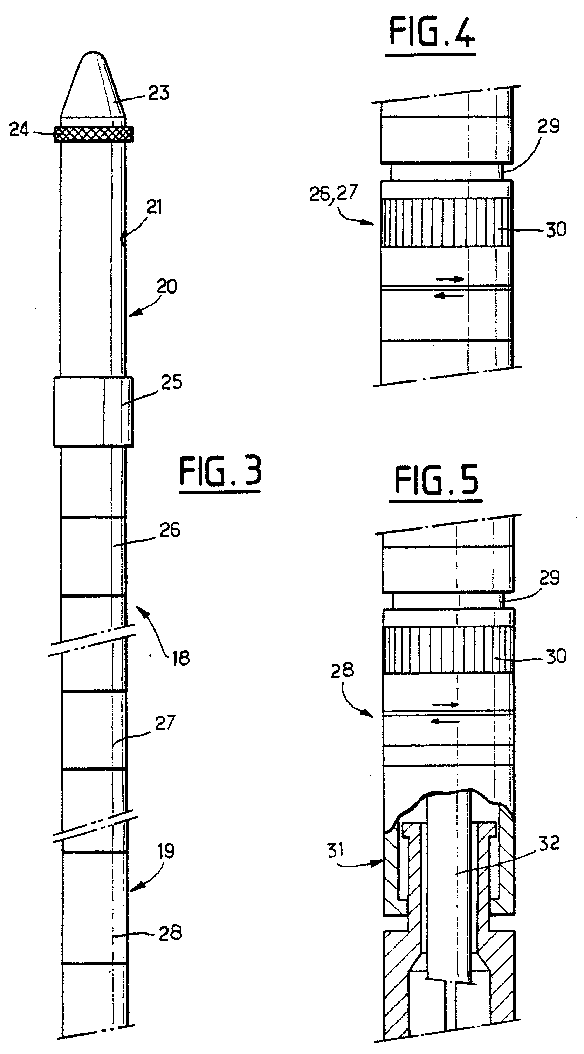

La tête de soudage comporte une cellule optique adaptée pour renvoyer radialement à travers une fenêtre latérale 21 (Fig. 3) le faisceau laser véhiculé par la fibre optique, ce faisceau étant focalisé par la cellule optique sur la paroi à souder. Un exemple de tête de soudage est décrit en détail dans la demande de brevet FR 88 13 602 précitée. On a représenté à la Fig. 2 la canne 18 dans deux positions actives correspondant aux deux soudures, haute et basse, à réaliser, dans lesquelles la canne traverse une ouverture supérieure 22 du bâti 9, ainsi que dans une troisième position rétractée permettant le déplacement du bras 8 d'un tube à manchonner à un autre.

La Fig. 3 représente la canne 18 en vue extérieure, avec son ogive d'extrémité avant ou supérieure 23 munie d'une brosse 24 de centrage, une bague de centrage 25 située au-dessous de la fenêtre 21, et, au-dessous de la bague 25, trois régions rigides d'entrainement en rotation 26 à 28 espacées axialement les unes des autres.

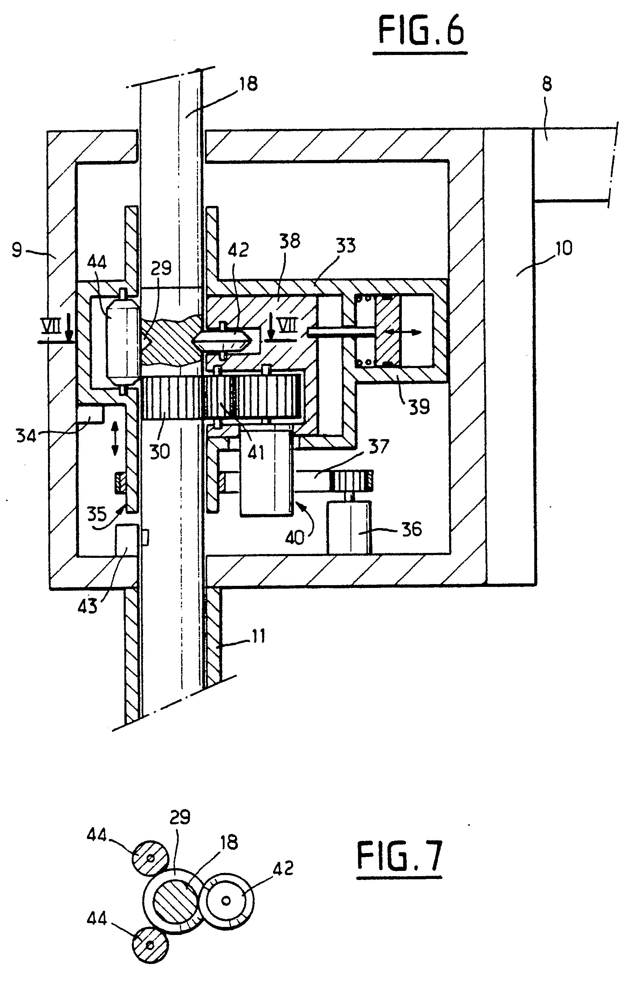

Les deux régions supérieures 26 et 27 sont identiques. Comme représenté à la Fig. 4, chacune d'elles comporte une gorge circulaire 29 et, au-dessous de celle-ci, une bague-pignon 30 montée par l'intermédiaire d'une roue libre, c'est-à-dire d'un embrayage unidirectionel. La région inférieure 28 (Fig.5) comporte les mêmes éléments et, en outre, sous le pignon, un double manchon téléscopique 31 permettant un débattement axial un peu supérieur au déplacement de la tête de soudage nécessaire pour effectuer plusieurs cordons de soudure circulaires rapprochés constituant ensemble un joint soudé. La gaine 32 de la fibre optique est immobilisée en rotation, la bague-pignon 30 de la région 28 et les parties de la canne situées au-dessus étant montées rotatives per rapport à cette gaine. Grâce aux trois roues libres, l'entrainement en rotation d'un pignon 30 provoque la rotation de ce pignon et de toute la partie de la canne située au-dessus, tandis que la partie de la canne située au-dessous de ce pignon reste immobile en rotation. Comme on le voit à la Fig. 6, le bâti 9 contient un châssis mobile 33 monté coulissant verticalement entre une position basse, définie par une butée 34 du bâti, et une position haute, définie par la venue du châssis en butée sur la paroi supérieure du bâti. Le déplacement vers le haut de ce châssis 33 est obtenu au moyen d'un système vis-écrou 35 entrainé par un moteur 36 via une courroie 37.

Dans le châssis 33 est monté coulissant radialement (par rapport à l'axe de la canne) un châssis secondaire 38 actionné par un vérin à fluide 39. Le châssis 38 porte d'une part un groupe moto-réducteur 40 comprenant un pignon d'entrainement 41 adapté pour engrener avec un pignon 30, et d'autre part, au-dessus du pignon 41, un galet fou 42 de forme plate, dont la surface périphérique est conjuguée des gorges 29.

Le fonctionnement est le suivant.

Au départ, le châssis 33 est en position basse, et le châssis secondaire 38 est en position inactive, c'est-à-dire déplacé vers la droite par rapport à sa position illustrée à la Fig. 6. Le pignon 41 et le galet 42 sont alors complètement dégagés du cylindre enveloppe de la canne.

Le bâti 9 est positionné par le bras 8 du porteur devant le tube T à réparer, et l'élévateur 10 applique le bâti 9 contre la plaque tubulaire P. Le manchon à souder M a préalablement été accosté dans le tube T par une technique connue, et l'outillage correspondant a été retiré du boa.

La canne 18 est introduire dans le boa, et le tire-pousse 6 la fait avancer jusqu'en position haute correspondant à la soudure supérieure à réaliser, cette position étant déterminée par un détecteur 43 prévu dans le bâti 9. La région 28 se trouve alors dans le châssis 33.

Le vérin 39 est actionné, de sorte que le pignon 41 engrène avec le pinion 30, qui se trouve au regard, et que le galet 42 s'engage simultanément dans la gorge 29, qui se trouve en regard, comme représenté à la Fig. 6. La canne est par ailleurs en appui sur deux galets cylindriques 44 qui tourillonnent dans le châssis 33, à la hauteur du galet 42 et à 120° de celui-ci (Fig. 7).

Le moteur 36 est mis en route, ce qui fait monter le châssis 3 et, par l'intermédiaire du galet 42, la canne 18, jusqu'au niveau correspondant au premier cordon de soudure à réaliser. Le faisceau laser de soudage est envoyé, et le moto-réducteur 40 fait effectuer à la canne une rotation de 360°.

Le moteur 36 fait ensuite redescendre le châssis 33 et la canne jusqu'au niveau du cordon suivant à réaliser, par exemple de 0,5mm. Le faisceau laser est de nouveau envoyé, le moto-réducteur 40 fait tourner la canne de 360°, et ainsi de suite.

Lorsque le premier joint, qui comporte par exemple cinq cordons, est terminé, le châssis 33 est ramené en position basse, le châssis 38 est ramené en position inactive ou débrayée par déplacement vers la droite de la Fig. 6, et le tire-pousse 6 fait descendre la canne sur une distance correspondant à l'écartement des deux joints à réaliser. La région 27 ou la région 26 de la canne se trouve alors dans le châssis 33, suivant le niveau du deuxième joint JA ou J (Fig. 1A ou Fig. 1B). Puis les cordons de soudure du second joint sont réalisés comme décrit ci-dessus.

Il est à noter que le débattement axial, de l'ordre de 15mm, nécessaire pour réaliser les cordons de chaque joint, est rendu possible grâce à la présence du double manchon télescopique 31 dans la région 28. En variante, le jeu de la canne dans le boa peut suffire pour permettre ce débattement.

On comprend que l'invention peut s'appliquer à divers types de travaux à effectuer à l'intérieur d'un tube. Par ailleurs, on peut facilement choisir le nombre et la position longitudinale de la ou des régions d'entraînement, en fonction des travaux à effectuer dans le tube.

**Revendications**

1. Outillage de travail à l'intérieur d'un élément tubulaire, du type comprenant une canne (18) qui comporte à son extrémité avant une tête de travail rotative (20) équipée de moyens (24, 25) de centrage dans l'élément tubulaire, et un bâti (9) traversé par la canne et muni de moyens (8) de positionnement par rapport à l'élément tubulaire, ce bâti étant équipé de moyens (40) d'entraînement en rotation de la canne, caractérisé en ce que les moyens d'entraînement en rotation (40) sont adaptées pour coopérer sélectivement avec au moins deux régions d'entraînement (26 à 28) de la canne espacées axialement et sont équipés de moyens (38, 39) d'embrayage-débrayage par rapport à cette canne, l'outillage comprenant en outre des moyens (6) d'avance longitudinale de la canne situés à distance, en arrière par rapport auxdits moyens d'entraînement en rotation.

2. Outillage suivant la revendication 1, caractérisé en ce que la canne (18) est constituée de plusieurs tronçons reliés les uns aux autres par des roues libres correspondant à chaque région d'entraînement (26 à 28).

3. Outillage suivant la revendication 1 ou 2, caractérisé en ce que le bâti (9) contient un châssis (33) mobile en translation axiale, des moyens (35 à 37) d'entraînement de ce châssis, et des moyens (42) d'accouplement sélectif de ce châssis à la canne.

4. Outillage suivant la revendication 3, caractérisé en ce que lesdits moyens d'accouplement sélectif (42) sont combinés avec lesdits moyens d'embrayage-débrayage.

5. Outillage suivant la revendication 4, caractérisé en ce que lesdits moyens d'entraînement en rotation comprennent un ensemble moto-réducteur (40) porté par un châssis secondaire (38) qui est mobile radialement dans le bâti (9) par rapport à la canne (18), et en ce que lesdits moyends d'accouplement sélectif comprennent un galet (42) adapté pour coopérer avec une gorge circulaire (29) de la canne et tourillonnant sur un axe parrallèle à cette canne et porté par le châssis secondaire.

6. Outillage suivant la revendication 5, caractérisé en ce que la châssis secondaire (38) est monté dans le châssis mobile (33).

7. Outillage suivant l'une quelconque des revendications 1 à 6, caractérisé en ce que la région d'entraînement (28) la plus éloignée de la tête de travail (20) comprend une liaison télescopique (31).

8. Outillage suivant l'une quelconque des revendications 1 à 7, pour le travail au laser, caractérisé en ce que la tête de travail (20) comprend une cellule optique qui comporte elle-même des moyens de focalisation et de renvoi optique pour recevoir un faisceau lumineux suivant l'axe de la tête et pour renvoyer ce faisceau focalisé sur un point d'impact de la paroi de l'élément tubulaire, et des moyens de transport de faisceau laser d'un laser (2) à la cellule optique.

# FIG.1A

# FIG.1B

FIG.2

FIG.3

FIG.4

FIG.5

## FIG.6

## FIG.7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | BE-A-871236 (THE BABCOCK & WILCOX)<br>* page 5, dernier alinéa - page 8, dernier alinéa; figures 1-3 *<br>--- | 1, 6 | B23K26/00<br>F22B37/00 |
| A | FR-A-2598950 (THOME)<br>* page 1, ligne 1 - page 4, dernier alinéa; figures 2, 3, 5 *<br>--- | 1, 6 | |
| A | EP-A-0027388 (WESTINGHOUSE ELECTRIC)<br>* page 5, ligne 20 - page 7, ligne 34; figures 2, 3 *<br>--- | 1 | |
| A | US-A-4080525 (GOBETZ)<br>* colonne 1, ligne 65 - colonne 3, ligne 61; figure 1 *<br>----- | 1, 7 | |

**DOMAINES TECHNIQUES RECHERCHES (Int. Cl.5 )**

F22B
B23K

Le présent rapport a été établi pour toutes les revendications

| Lieu de la recherche | Date d'achèvement de la recherche | Examinateur |
|---|---|---|
| LA HAYE | 08 OCTOBRE 1990 | HERBRETEAU D. |